# EUROPEAN PATENT SPECIFICATION

(11) **EP 1 348 598 B1**
(45) Date of publication and mention of the grant of the patent: **12.12.2007**
(21) Application number: 03005951.3
(22) Date of filing: 17.03.2003
(51) Int. Cl.: B60R 21/16, B62J 27/00

(54) **Airbag apparatus**
Airbag
Airbag

(30) Priority: 27.03.2002 JP 2002089415
(43) Date of publication of application: 01.10.2003
(73) Proprietor: HONDA GIKEN KOGYO KABUSHIKI KAISHA, Tokyo (JP)
(72) Inventor: Yamazaki, Takeshi, K. K. Honda Gijutsu Kenkyusho, Wako-shi, Saitama (JP); Akiyama, Hideki, K. Kaisha Honda Gijutsu Kenkyusho, Wako-shi, Saitama (JP)
(74) Representative: Liska, Horst

(56) References cited:
- DE-A- 10 106 437
- PATENT ABSTRACTS OF JAPAN vol. 2000, no. 25, 12 April 2001 (2001-04-12) & JP 2001 219884 A (TOYODA GOSEI CO LTD;YAMAHA MOTOR CO LTD), 14 August 2001 (2001-08-14)

## Description

The present invention relates to an airbag apparatus, and more specifically, to an airbag apparatus suitable for mounting on a saddle-riding type vehicle in which a storage space for the airbag body cannot be easily secured.

It is publicly known that an airbag is mounted on a four-wheel vehicle for alleviating an impact applied to an occupant in case of collision of the vehicle, and is in widespread use. In recent years, it is proposed to mount the airbag apparatus not only on four-wheel vehicles, but also on saddle-riding type vehicles such as motorcycles. For example, in the motorcycle disclosed in JP-A-2001-219884, the airbag is supported by a vehicle body so as to be capable of moving with respect to a handle at the position in the vicinity of the center of rotation of the handle between the handle and a wind-shielding member covering forwardly of the handle. In this motorcycle, the airbag is inflated laterally of the vehicle body along the handle.

The following problems exist in the aforementioned airbag apparatus for a motorcycle. In other words, the airbag apparatus is disposed on the front side of the handle, but there is a case in which a sufficient space cannot be secured in front of the handle depending on the shape of the vehicle. When providing the airbag apparatus between the handle and the wind-shielding member, it is required to secure a space for storing the airbag in advance, and thus it is not easy to mount the airbag after assembly.

An object of the present invention is to provide the airbag apparatus that does not interfere with the operation of the handle of the saddle-riding type vehicle, and, in addition, that can be mounted easily on the vehicle after assembly.

In order to solve the above-described problems, the present invention as defined in claim 1 is the airbag apparatus for the saddle-riding type vehicle having a main frame and a steering handle mounted so as to be capable of rotating with respect to a head pipe at the front end of the main frame, wherein the airbag apparatus includes an airbag mounting member extending from the mainframe forwardly of the vehicle body across the central axis of rotation of the aforementioned steering handle, an airbag module mounted on the aforementioned airbag mounting member, and a covering member for covering on the aforementioned airbag module and including a weakened portion.

According to a preferred embodiment the aforementioned saddle-riding type vehicle includes a shaft member passing through the aforementioned head pipe in the axial direction thereof, a top bridge to be connected to the aforementioned shaft member, and a pair of front forks to be connected to the aforementioned top bridge, and in that the aforementioned steering handle is fixed on the aforementioned top bridge and the aforementioned airbag mounting member extends at least to the region covering directly above the aforementioned top bridge.

The airbag apparatus is installed utilizing a space above the central axis of the rotation of the steering handle. In other words, this space is located at the position nearest to the rider in front of the rider. Therefore, the rider is received by the deployed airbag before knocking against any members upon collision. The airbag apparatus provided in a space having no disturbing object on the steering handle is convenient for mounting on the saddle-riding type vehicle such as a motorcycle after assembly as an optional member.

Furthermore, since the airbag apparatus is provided at the position convenient for mounting after assembly and fixed on the mainframe, that is, on the vehicle body, it is not affected by the movement of the steering handle upon collision, and thus the deployed airbag can receive the rider from the front.

The airbag apparatus is mounted effectively in the space on the central axis of rotation of the steering handle. Therefore, the airbag apparatus may be mounted easily after assembly in the saddle-riding type vehicle such as a motorcycle in which a mounting space cannot be secured in the vehicle body.

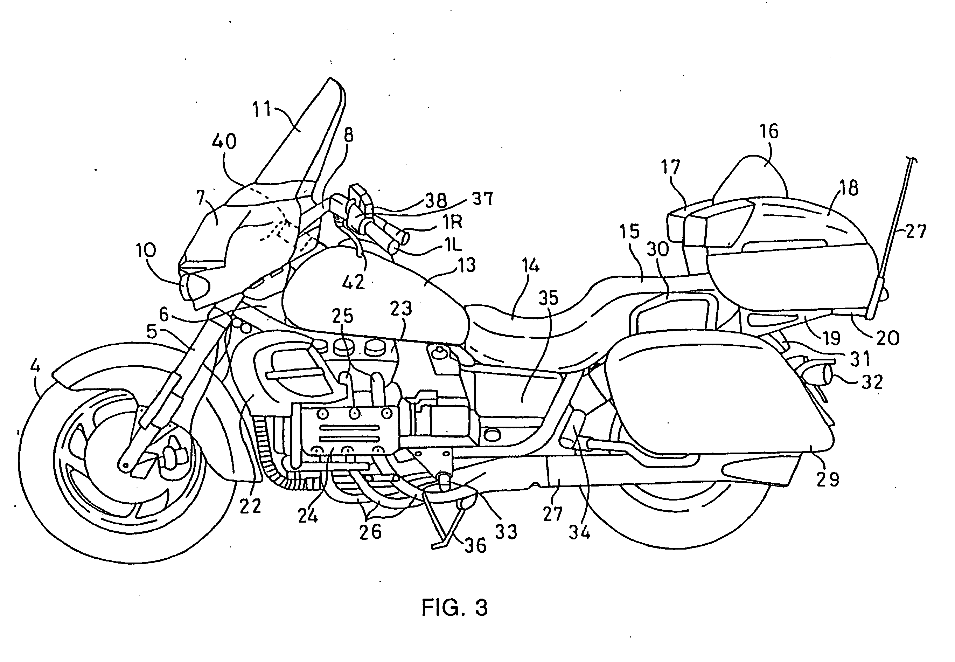

Fig. 3 is a side view of a motorcycle including an airbag apparatus according to an embodiment of the present invention.
Fig. 1 is an enlarged side view showing the front portion of the motorcycle on which the airbag apparatus is mounted.
Fig. 2 is a perspective view of the portion in the vicinity of the steering handle of the motorcycle on which the airbag apparatus is mounted.

Referring now to the drawings, the present invention will be described in detail. Fig. 3 is a side view of a motorcycle as an example of the saddle-riding type vehicle on which the airbag apparatus of the present invention is to be mounted. In the same figure, a front fork 5 supporting a front wheel 4 is supported so as to be rotatable with respect to a main frame 6, and a handle 8 is attached on the upper portion thereof. An airbag apparatus 40 is installed above the portion around the center of rotation of the handle 8.

A front fairing (cowl) 7 is provided on the front face of the handle 8. Headlight, not shown, is accommodated in the front fairing 7, and direct indicator lights 10 are attached on both sides. A wind-shielding screen 11 is mounted on the upper portion of the front fairing 7.

A fuel tank 13, a rider's seat 14, and a fellow passenger's seat 15 are disposed in order from the front fairing 7 rearwardly of the vehicle body. The fellow passenger's seat 15 is formed integrally with the rider's seat 14 and includes a seatback 16 and armrests 17. A rear box 18 is provided behind the seatback 16. A bracket 19 supporting the rear box 18 is provided with a supporting member 20 which projects in a horizontal direction, and the supporting member 20 is provided with an antenna 21.

There are provided an air cleaner 22 is provided in front of the lower portion of the fuel tank 13, and a carburetor 23 rearwardly thereof. An air intake pipe 25 extends from a carburetor 23 toward an engine 24. The engine 24 is a horizontally opposed 6-cylinder engine. An exhaust pipe 26 is drawn rearward from the engine 24, and the exhaust pipe 26 is connected to a muffler 27. A radiator 74 is provided forwardly of the engine 24.

Side boxes 29 are disposed on the left and right of the rear wheel, and handrail pipes for the fellow passenger are provided above thereof. A tail lamp 31 and a rear direction indicator lamp 32 are attached on the rear portion of the vehicle body. Rider's steps 33 and fellow passenger's steps 34 are provided on the left and right of the vehicle body. Reference numeral 35 designates a side cover and numeral 36 designates a main stand.

Left and right handle grips 1L and 1R are provided at the ends of the handle 8, and a switch unit 37 is provided at the position adjacent to the handle grip 1L. An audio switch unit 38 is provided above adjacently on the switch unit 37.

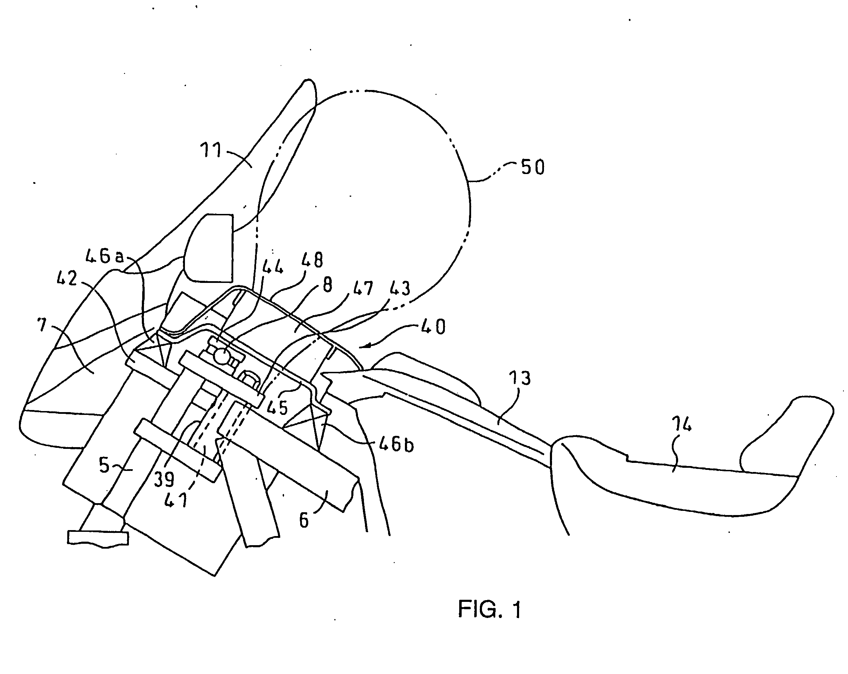

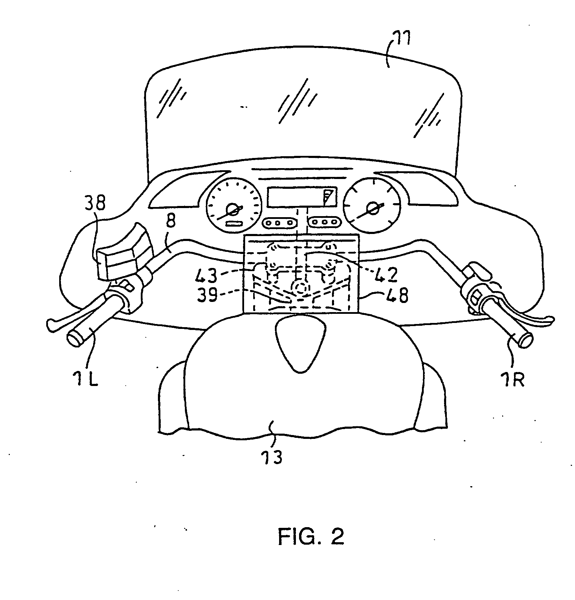

Fig. 1 is an enlarged side view showing the front portion of the motorcycle illustrating the position to mount the airbag apparatus, and Fig. 2 is a perspective view of the portion in the vicinity of the handle. As shown in Fig. 1 and Fig. 2, a head pipe 39 is connected to the front portion of the main frame 6. The upper portion of the front fork 5 is connected by a top bridge 43 and the top bridge 43 is rotatably connected to the head pipe 39 via a pivot 41. A holding attachment 44 for holding the handle 8 is secured on the top bridge 43.

A cowl stay 42 for supporting the front fairing 7 is connected to the main frame 6, and overhung forwardly from the vehicle body on the left side and right side thereof. The cowl stay 42, being projected from the head pipe 39 forwardly of the vehicle body, is an aggregate for supporting the cowl or the front faring 7 in front thereof. The cowl stay 42 and the main frame 6 are provided with auxiliary members 46a, 46b crossways on the sides thereof, and a mounting plate 45 of the airbag apparatus is laid between these auxiliary members 46a and 46b. An airbag module 47 is accommodated on the plate 45, and the upper surface of the airbag module 47 is covered by the airbag cover 48.

The airbag module 47 includes a folded airbag body, an inflator for deploying the airbag body, that is, a canister for accommodating high-pressure gas, and a squib exploding in response to detection of collision by a collision sensor (none of them are shown in the figure). A canister is opened by explosion of the squib and gas is fed to the airbag body to inflate and deploy the airbag body. The airbag cover 48 has a weakened portion broken by the pressure of the airbag body being inflated. The structure, material and so on to be used for the weakened portion of the airbag cover 48 may be selected from those that are publicly known as shown in JP-A-5-105016 and JP-A-2001-206181 respectively. Reference numeral 50 in the figure represents an inflated and deployed airbag.

The impact sensor for detecting impact of collision may be, for example, an acceleration sensor, which detects the abrupt change in speed (deceleration) upon collision and actuates the inflator.

The invention provides an airbag apparatus for a motorcycle that can easily be mounted after assembly.

To achieve this, an airbag apparatus for a motorcycle having a steering handle 8 mounted so as to be capable of rotating with respect to a head pipe 39 mounted at the front end of a main frame 6 is provide. An airbag mounting member 45 is mounted so as to extend from the main frame 6 toward the front of the vehicle body across the central axis of rotation 41 of the steering handle 8 and a top bridge 43. An airbag module 47 is mounted on the airbag mounting member 45. The upper portion of the airbag module 47 is covered by a covering member 48 including a weakened portion.

## Claims

1. A saddle-riding type vehicle having a main frame (6) and a steering handle (8) mounted so as to be capable of a rotating motion with respect to a head pipe (39) at the front end of the main frame (6), comprising:
an airbag apparatus including
an airbag mounting member (45) extending from the main frame (6) forwardly of a vehicle body across the central axis of rotation of said steering handle (8);
an airbag module (47) mounted on said airbag mounting member (45); and
a covering member (48) including a weakened portion for covering said airbag module (47).

2. A saddle-riding type vehicle according to claim 1, **characterized in that** said saddle-riding type vehicle includes a shaft member (41) passing through said head pipe (39) in the axial direction thereof, a top bridge (43) to be connected to said shaft member (41), and a pair of front forks (5) to be connected to said top bridge (43), and **in that** said steering handle (8) is fixed on said top bridge (43) and said airbag mounting member (45) extends at least to the region covering directly above said top bridge (43).

## Patentansprüche

1. Sattelreittyp-Fahrzeug mit einem Hauptrahmen (6) und einem Lenker (8), der so montiert ist, dass er bezüglich des Kopfrohres (39) am Vorderende des Hauptrahmens (6) zu einer Drehbewegung fähig ist, umfassend:
eine Luftsackvorrichtung, enthaltend:
ein Luftsackmontageelement (45), das sich vom Hauptrahmen (6) einer Fahrzeugkarosserie nach vorne über die zentrale Rotationsachse des Lenkers (8) erstreckt;
ein Luftsackmodul (47), das am Luftsackmontageelement (45) montiert ist; und
ein Abdeckelement (48), das einen geschwächten Abschnitt enthält, zum Abdecken des Luftsackmoduls (47).

2. Sattelreittyp-Fahrzeug nach Anspruch 1, **dadurch gekennzeichnet, dass** das Sattelreittyp-Fahrzeug enthält: ein Schaftelement (41), das durch das Kopfrohr (39) in dessen Axialrichtung verläuft, eine obere Brücke (43), die mit dem Schaftelement (41) verbunden ist, und ein Vordergabelpaar (5), das mit der oberen Brücke (43) verbunden ist; und **dadurch** dass der Lenker (8) an der oberen Brücke (43) befestigt ist und das Luftsackmontageelement (45) sich wenigstens bis zu dem Bereich erstreckt, der direkt die obere Brücke (43) von oben abdeckt.

## Revendications

1. Véhicule doté d'un siège du type selle présentant un cadre principal (6) et un guidon (8) monté de manière à être capable de tourner par rapport à un tube de fourche (39) à l'extrémité avant du cadre principal (6), comprenant :
un appareil de coussin gonflable de sécurité comportant un élément de montage de coussin gonflable de sécurité (45) s'étendant depuis le cadre principal (6) vers l'avant d'un corps de véhicule en travers de l'axe central de rotation dudit guidon (8) ;
un module de coussin gonflable de sécurité (47) monté sur ledit élément de montage de coussin gonflable de sécurité (45) ;
et
un élément de recouvrement (48) comportant une partie affaiblie destinée à recouvrir ledit module de coussin gonflable de sécurité (47).

2. Véhicule doté d'un siège du type selle selon la revendication 1, **caractérisé en ce que** ledit véhicule doté d'un siège du type selle comporte un élément d'arbre (41) passant à travers ladite tubulure de refoulement (39) dans sa direction axiale, une traverse supérieure (43) à raccorder audit élément d'arbre (41) et une paire de fourches avant (5) à raccorder à ladite traverse supérieure (43), et **en ce que** ledit guidon (8) est fixé sur ladite traverse supérieure (43) et ledit élément de montage de coussin gonflable de sécurité (45) s'étend au moins vers la zone recouvrant directement le dessus de ladite traverse supérieure (43).
